(19) Europäisches Patentamt
European Patent Office
Office européen des brevets

(11) Veröffentlichungsnummer: **0 078 460**
**A1**

(12) **EUROPÄISCHE PATENTANMELDUNG**

(21) Anmeldenummer: **82109741.7**

(22) Anmeldetag: **22.10.82**

(51) Int. Cl.³: **C 09 B 45/16**
// D06P3/02

(30) Priorität: **02.11.81 DE 3143361**

(43) Veröffentlichungstag der Anmeldung: **11.05.83**
**Patentblatt 83/19**

(84) Benannte Vertragsstaaten: **CH DE FR GB IT LI**

(71) Anmelder: **BASF Aktiengesellschaft,**
**Carl-Bosch-Strasse 38, D-6700 Ludwigshafen (DE)**

(72) Erfinder: **Grychtol, Klaus, Dr., Seebacher Strasse 96 A,**
**D-6702 Bad Duerkheim (DE)**

(54) **Metallkomplexfarbstoffe.**

(57) Die Erfindung betrifft eine Metallkomplexfarbstoffmischung erhältlich durch Chromierung von ungefähr äquimolaren Mengen der Farbstoffe der Formeln

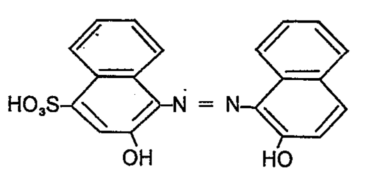

und

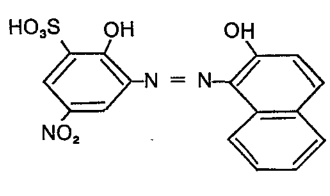

sowie den Farbstoff, der in Form der freien Säure der Formel I

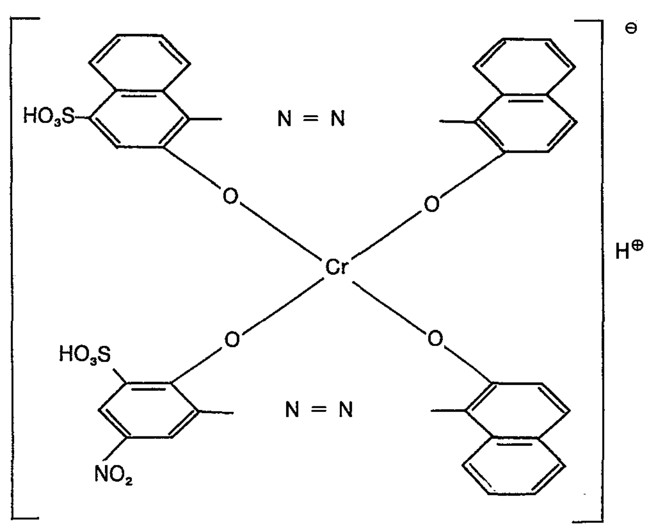

entspricht.

Das erfindungsgemäße Gemisch sowie der unsymmetrische Metallkomplex eignen sich sehr gut zum Färben stickstoffhaltiger Fasern sowie von Leder.

EP 0 078 460 A1

Metallkomplexfarbstoffe

Die Erfindung betrifft eine Metallkomplexfarbstoffmischung erhältlich durch Chromierung von ungefähr äquimolaren Mengen der Farbstoffe der Formeln

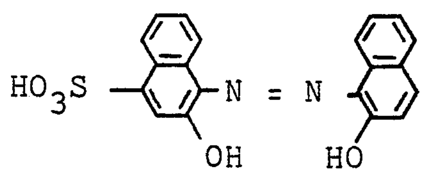

und

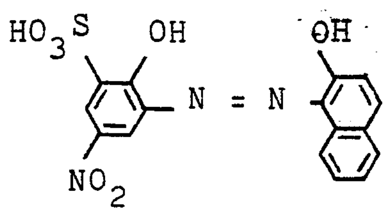

Sie betrifft weiterhin den Farbstoff, der in Form der freien Säure der Formel I

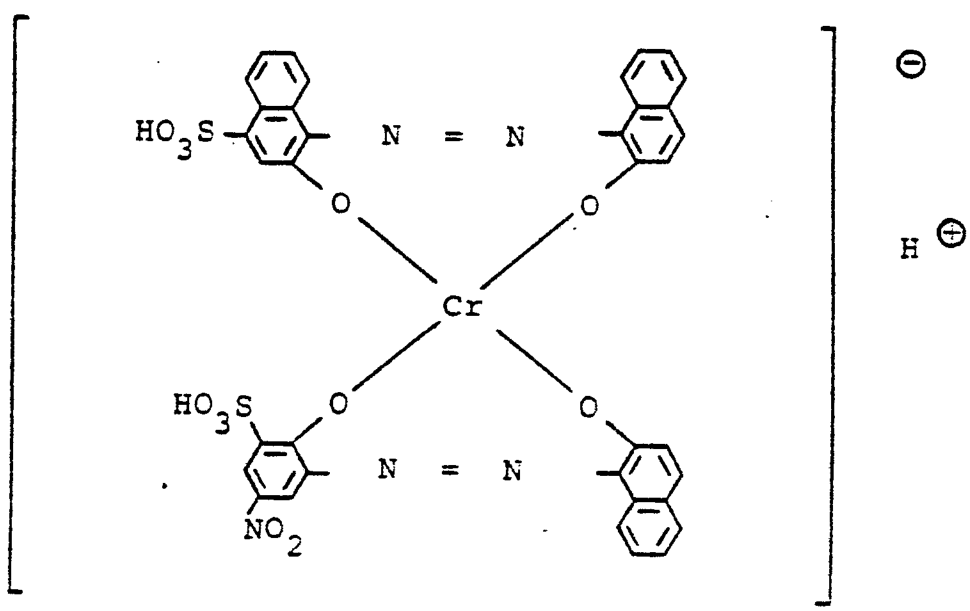

entspricht.

Bg/ro

Zur Herstellung des Farbstoffes der Formel I kann man die entsprechenden 1:1-Cr-Komplexe mit den zugehörigen metallfreien Verbindungen in an sich bekannter Weise umsetzen.

Zur Herstellung der Metallkomplexfarbstoffmischung chromiert man die Mischung der nichtmetallisierten Azofarbstoffe. Dabei erhält man neben dem Farbstoff der Formel I auch jeweils die symmetrischen Metallkomplexe.

Einzelheiten der Herstellung können den Beispielen entnommen werden, in denen sich Angaben über Teile und Prozente, sofern nicht anders vermerkt, auf das Gewicht beziehen.

Das erfindungsgemäße Farbstoffgemisch sowie der erfindungsgemäße Farbstoff eignen sich zum Färben natürlicher und synthetischer Polyamide, insbesondere von Nylon oder Wolle sowie von Leder. Man erhält blaugraue Färbungen mit sehr guten Echtheiten.

Durch Umsetzung mit langkettigen Aminen kann man den Farbstoff auch in lipophile Salze überführen, die beispielsweise zum Färben von Lacken, Lösungsmitteln und Folien geeignet sind.

Beispiel 1

600 Teile feuchten Preßkuchens, enthaltend 276 Teile des Kupplungsfarbstoffs aus 1-Diazo-2-naphthol-4-sulfonsäure und ß-Naphthol, und 800 Teile feuchtes Preßgut, enthaltend 343 Teile des 1:1-Chromkomplexes des Kupplungsfarbstoffs aus diazotierter 1-Amino-2-hydroxy-5-nitrobenzol-3-sulfonsäure und ß-Naphthol, werden in 3000 Volumenteilen Wasser auf 70°C erwärmt. Durch Zugabe von Natronlauge wird ein pH von 6,8 bis 7,2 gehalten. Die Umsetzung wird chromatographisch verfolgt und ist in etwa vier Stunden beendet. Nötigenfalls wird klärfiltriert, und der Farbstoff wird in Form eines schwarzen, sehr gut wasserlöslichen Pulvers durch Sprühtrocknung isoliert.

Wolle und Nylon werden graublau gefärbt. Die Licht- und Naßechtheiten sind sehr gut.

Zum selben Farbstoff gelangt man, wenn der 1:1-Cr-Komplex des Kupplungsproduktes aus 1-Diazo-2-naphthol-4-sulfonsäure und ß-Naphthol mit dem metallfreien Kupplungsfarbstoff aus diazotierter 1-Amino-2-hydroxy-5-nitro-benzol-3-sulfonsäure und ß-Naphthol umgesetzt wird.

Beispiel 2

158 Teile 2-Naphthol werden in 400 Teilen Wasser bei 60°C mit 44 Teilen Natriumhydroxid gelöst. Man verdünnt mit 600 Teilen Wasser und fügt 42 Teile Natriumhydrogencarbonat zu. Bei 55°C werden dann 125 Teile 1-Diazo-2-naphtol-4-sulfonsäure in Portionen eingetragen. Der pH-Wert wird durch Zugabe von insgesamt 20 Teilen Natriumhydroxid bei 10,6 bis 10,8 gehalten. Die Kupplung ist nach 30 Minuten beendet. Man stellt sodann mit 2700 Teilen Eiswasser eine Temperatur von 30 bis 35°C ein und läßt anschließend eine Diazoniumsalzlösung zulaufen, die aus 117 Teilen 4-Nitro-2-amino-1-hydroxybenzol-6-sulfonsäure, 600 Teilen Wasser, 400 Teilen Eis und 50 Teilen konzentrierter Salzsäure durch Zusatz von 155 Volumenteilen 3,3-n-Natriumnitritlösung und halbstündiges Nachrühren bereitet wurde. Mit Amidosulfonsäure wird zuvor ein gegebenenfalls vorhandener geringer Nitritüberschuß zerstört.

Die zweite Kupplung ist nach zweistündigem Rühren bei pH 9 bis 9,3 beendet.

Anschließend wird die Mischung mit einer Lösung von 100 Teilen Chromformiat in verdünnter Ameisensäure versetzt und auf 100°C erhitzt. Bei dieser Temperatur wird solange gerührt, bis die Umsetzung laut chromatographischer Analyse beendet ist. Man kühlt dann auf 25°C ab, versetzt langsam mit 1200 Teilen Natriumchlorid und rührt über Nacht nach.

Nach dem Absaugen und Trocknen erhält man 644 Teile eines dunklen, elektrolythaltigen Farbstoffpulvers.

Der Farbstoff löst sich sehr leicht in Wasser und färbt Wolle, Polyamid und Leder in graublauen Tönen mit sehr guten Echtheiten.

Patentansprüche

1. Metallkomplexfarbstoffmischung erhältlich durch Chromierung von ungefähr äquimolaren Mengen der Farbstoffe der Formeln

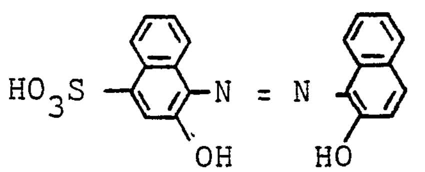

und

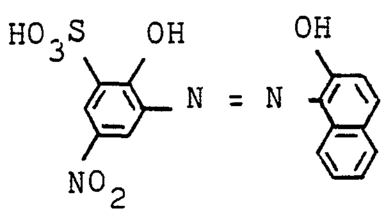

2. Metallkomplexfarbstoff, der in Form der freien Säure der Formel

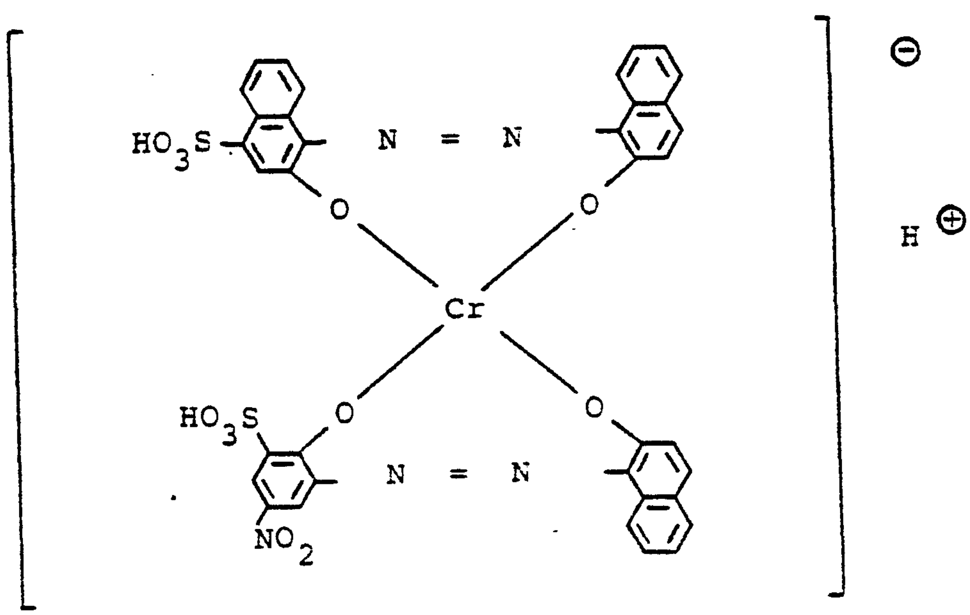

entspricht.

3. Verwendung des Farbstoffs gemäß Anspruch 1 und 2 zum Färben stickstoffhaltiger Fasern und von Leder.

Europäisches Patentamt

# EUROPÄISCHER RECHERCHENBERICHT

0078460 Nummer der Anmeldung

EP 82 10 9741

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| Y | COLOUR INDEX, Society of Dyers and Colorists., 3rd Edition, 1971, BRADFORD (GB) * Band 4, Seiten 4082,4083, Formeln 15707, 15691 * | 1,3 | C 09 B 45/16 // D 06 P 3/02 |
| Y | US-A-1 887 602 (STRAUB et al.) * Seite 1, Beispiel 1 * | 1-3 | |
| A | FR-A- 770 916 (SOC. CHIM. BALE) * Seite 1, ganz * | 1,3 | |
| A | FR-E- 40 844 (SOC. CHIM. BALE) * Seite 1, Zeilen 18-42 * | 1,3 | |

RECHERCHIERTE SACHGEBIETE (Int. Cl. 3)

C 09 B 45/00

Der vorliegende Recherchenbericht wurde für alle Patentansprüche erstellt.

| Recherchenort | Abschlußdatum der Recherche | Prüfer |
|---|---|---|
| DEN HAAG | 27-01-1983 | GREEN C.H. |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82